# EUROPEAN PATENT APPLICATION

(11) **EP 4 640 758 A1**
(43) Date of publication of application: **29.10.2025**
(21) Application number: 23906637.6
(22) Date of filing: 30.11.2023
(51) Int. Cl.: C08L 27/06, B32B 27/30, C08G 63/40, C08L 67/00

(54) **PLASTICIZER FOR VINYL CHLORIDE RESIN, AND VINYL CHLORIDE RESIN COMPOSITION AND MOLDED PRODUCT THEREOF**

(30) Priority: 20.12.2022 JP 2022203100
(71) Applicant: DIC Corporation, Tokyo 174-8520 (JP)
(72) Inventor: NOGUCHI Takafumi, Ichihara-shi, Chiba 290-8585 (JP); TAJIRI Yusuke, Ichihara-shi, Chiba 290-8585 (JP)
(74) Representative: Kraus & Lederer PartGmbB
(86) International application number: PCT/JP2023/042848
(87) International publication number: WO 2024/135269

(57) **Abstract**

Provided is a plasticizer for a vinyl chloride resin that has a low solidification point and can impart both heat resistance and cold resistance to a vinyl chloride resin molded product. Specifically, provided is a plasticizer for a vinyl chloride resin that is a polyester using a glycol having 2 to 18 carbon atoms, an aliphatic dicarboxylic acid having 4 to 14 carbon atoms, and a monoalcohol having 4 to 18 carbon atoms and/or a monocarboxylic acid having 2 to 21 carbon atoms as reaction raw materials, in which the glycol includes 1,5-pentanediol and an alkylene glycol having a branched alkylene chain having 3 to 18 carbon atoms; and in which the 1,5-pentanediol in the glycol has a content proportion within a range of 5 to 90 mol%.

## Description

### TECHNICAL FIELD

The present invention relates to a plasticizer for a vinyl chloride resin, a vinyl chloride resin composition, and a molded product thereof.

### BACKGROUND ART

A vinyl chloride resin (polyvinyl chloride, PVC) is one of the typical plastics, and before use, a vinyl chloride resin is generally softened by adding a plasticizer to impart performance, such as softness or low-temperature characteristics, and easily achieve thermoforming processability.

A plasticizer used for a vinyl chloride resin requires various performance, such as compatibility, cold resistance, and heat resistance, and higher alkyl esters of polybasic acids, such as a phthalate ester, an adipate ester, and a trimellitate ester, are known. Among these, a phthalate ester is generally used as a plasticizer for a vinyl chloride resin from the viewpoint of price and performance balance.

An automotive dashboard generally includes a laminate structure of a urethane resin layer and a vinyl chloride resin layer, but in an application requiring heat resistance, such as the dashboard, a phthalate ester plasticizer does not achieve sufficient heat resistance, and a polyester-based plasticizer is used instead of the phthalate ester plasticizer (e.g., PTL 1).

### CITATION LIST

### PATENT LITERATURE

PTL 1: JPH03-66727 A

### SUMMARY OF INVENTION

### TECHNICAL PROBLEM

Whereas a polyester-based plasticizer using 1,5-pentanediol as a glycol can impart heat resistance and cold resistance to a reductant molded product, the solidification point of a polyester is increased. Accordingly, when the polyester-based plasticizer is used in an automotive dashboard, there has been a problem in that part of the plasticizer crystallizes and bleeds out to deteriorate plasticization performance. When the crystallization and bleeding results in the deterioration of plasticization performance of the plasticizer, a vinyl chloride resin layer breaks into hard fragments and scatters during airbag deployment, which may cause danger in the interior of the automobile.

An object to be achieved by the present invention is to provide a plasticizer for a vinyl chloride resin that has a low solidification point and can impart both heat resistance and cold resistance to a vinyl chloride resin molded product.

Another object to be achieved by the present invention is to provide a molded product of a vinyl chloride resin composition in which the bleeding of the plasticizer is suppressed and that can exhibit both heat resistance and cold resistance.

### SOLUTION TO PROBLEM

The inventors of the present invention have made extensive investigations to achieve the above-mentioned objects, and as a result, have found that a plasticizer for a vinyl chloride resin that is a polyester using a specific glycol containing 1,5-pentanediol exhibits a low solidification point and can impart sufficient heat resistance and cold resistance to a molded product to be obtained. The present invention has been completed.

Specifically, the present invention relates to the following plasticizer for a vinyl chloride resin and the like.
1. A plasticizer for a vinyl chloride resin that is a polyester using a glycol having 2 to 18 carbon atoms, an aliphatic dicarboxylic acid having 4 to 14 carbon atoms, and a monoalcohol having 4 to 18 carbon atoms and/or a monocarboxylic acid having 2 to 21 carbon atoms as reaction raw materials,
   in which the glycol includes 1,5-pentanediol and an alkylene glycol having a branched alkylene chain having 3 to 18 carbon atoms; and
   in which the 1,5-pentanediol in the glycol has a content proportion within a range of 5 to 90 mol%.
2. The plasticizer for a vinyl chloride resin according to 1, in which the plasticizer for a vinyl chloride resin has a solidification point of 15°C or lower.
3. The plasticizer for a vinyl chloride resin according to 1 or 2, in which the alkylene glycol is one or more kinds selected from the group consisting of 1,2-propanediol, 1,2-butanediol, 1,3-butanediol, 2-methyl-1,3-propanediol, neopentyl glycol, and 3-methyl-1,5-pentanediol.
4. The plasticizer for a vinyl chloride resin according to any of 1 to 3, in which the aliphatic dicarboxylic acid having 4 to 14 carbon atoms is one or more kinds selected from the group consisting of adipic acid and sebacic acid.
5. The plasticizer for a vinyl chloride resin according to any one of 1 to 4, in which the monoalcohol is one or more kinds selected from the group consisting of octanol, 2-ethylhexanol, and isononyl alcohol.
6. The plasticizer for a vinyl chloride resin according to any one of 1 to 5, in which the monocarboxylic acid is one or more kinds selected from the group consisting of 2-ethylhexanoic acid, a hydrogenated coconut oil fatty acid, and lauric acid.
7. The plasticizer for a vinyl chloride resin according to any one of 1 to 6, in which the polyester has a number-average molecular weight within a range of 500 to 4,000.
8. A vinyl chloride resin composition including: the plasticizer for a vinyl chloride resin according to any of 1 to 7; and a vinyl chloride resin.
9. The vinyl chloride resin composition according to 8, in which the plasticizer for a vinyl chloride resin has a content within a range of 10 to 150 parts by mass with respect to 100 parts by mass of the vinyl chloride resin.
10. A molded product of the vinyl chloride resin composition according to 8 or 9.
11. A laminate including: a urethane resin layer; and a vinyl chloride resin layer, in which the vinyl chloride resin layer includes the plasticizer for a vinyl chloride resin according to any of 1 to 7.

### ADVANTAGEOUS EFFECTS OF INVENTION

According to the present invention, a plasticizer for a vinyl chloride resin that has a low solidification point and can impart both heat resistance and cold resistance to a vinyl chloride resin molded product can be provided.

According to the present invention, a molded product of a vinyl chloride resin composition in which bleeding of a plasticizer is suppressed and that may exhibit both heat resistance and cold resistance can be provided.

### DESCRIPTION OF EMBODIMENTS

Hereinafter, an embodiment of the present invention will be described. The present invention is not limited to the following embodiments, and the present invention may be appropriately modified and carried out within a range that does not impair the effects of the present invention.

### [Plasticizer for Vinyl Chloride Resin]

A plasticizer for a vinyl chloride resin of the present invention is a polyester using a glycol having 2 to 18 carbon atoms, an aliphatic dicarboxylic acid having 4 to 14 carbon atoms, and a monoalcohol having 4 to 18 carbon atoms and/or a monocarboxylic acid having 2 to 21 carbon atoms as reaction raw materials.

Here, the "reaction raw material" means a raw material constituting the polyester of the present invention, and means that a solvent and a catalyst that does not constitute the polyester are not contained.

In the present invention, the glycol having 2 to 18 carbon atoms serving as the reaction raw material includes 1,5-pentanediol and an alkylene glycol having a branched alkylene chain having 3 to 18 carbon atoms, and the content proportion of the 1,5-pentanediol in the glycol is within the range of 5 to 90 mol%.

When the range of the content proportion of the 1,5-pentanediol is the above-mentioned range, the preparation amounts of the reaction raw materials may be appropriately adjusted.

The polyester that is the plasticizer for a vinyl chloride resin of the present invention may have a solidification point of 15°C or lower, and the crystallization of the plasticizer can be suppressed. Here, the "solidification point" is a value measured according to a method described in Examples.

Hereinafter, the polyester that is the plasticizer for a vinyl chloride resin of the present invention is sometimes simply referred to as "polyester of the present invention."

The above-mentioned glycol having 2 to 18 carbon atoms is preferably an alkylene glycol having 2 to 18 carbon atoms or an oxyalkylene glycol having 2 to 18 carbon atoms.

Examples of the alkylene glycol having 2 to 18 carbon atoms include ethylene glycol, 1,2-propylene glycol, 1,3-propanediol, 1,2-butanediol, 1,3-butanediol, 2-methyl-1,3-propanediol, 1,4-butanediol, 1,5-pentanediol, 2,2-dimethyl-1,3-propanediol (neopentyl glycol), 1,5-pentanediol, 2,2-diethyl-1,3-propanediol (3,3-dimethylolpentane), 2-n-butyl-2-ethyl-1,3-propanediol (3,3-dimethylolhepatane), 3-methyl-1,5-pentanediol, 1,6-hexanediol, cyclohexanedimethanol, 2,2,4-trimethyl-1,3-pentanediol, 2-ethyl-1,3-hexanediol, 2-methyl-1,8-octanediol, 1,9-nonanediol, 1,10-decanediol, and 1,12-octadecanediol.

The oxyalkylene glycol having 2 to 18 carbon atoms is, for example, the alkylene glycol having 2 to 18 carbon atoms in which one carbon atom is substituted by an oxygen atom, and examples thereof include diethylene glycol, triethylene glycol, tetraethylene glycol, dipropylene glycol, and tripropylene glycol.

In the present invention, the glycol serving as the reaction raw material includes 1,5-pentanediol and an alkylene glycol having a branched alkylene chain having 3 to 18 carbon atoms, and the content proportion of the 1,5-pentanediol in the glycol is within the range of 5 to 90 mol%.

The lower limit of the content proportion of the 1,5-pentanediol in the glycol serving as the reaction raw material is 5 mol% or more, preferably 10 mol% or more, 15 mol% or more, 20 mol% or more, 25 mol% or more, or 30 mol% or more.

Similarly, the upper limit of the content proportion of the 1,5-pentanediol in the glycol serving as the reaction raw material is 90 mol% or less, preferably 85 mol% or less, 80 mol% or less, 75 mol% or less, 60 mol% or less, or 55 mol% or less.

The content proportion of the 1,5-pentanediol is preferably within the range of 10 to 80 mol%, more preferably within the range of 20 to 60 mol%.

1,5-pentanediol derived from a bioresource is available. A plasticizer having a high ratio of biomass can be formed as the plasticizer for a vinyl chloride resin of the present invention by appropriately selecting a reaction raw material other than 1,5-pentanediol.

Examples of the alkylene glycol having a branched alkylene chain having 3 to 18 carbon atoms (hereinafter also simply referred to as "branched alkylene glycol") include 1,2-propanediol, 1,2-butanediol, 1,3-butanediol, 2-methyl-1,3-propanediol, neopentyl glycol, and 3-methyl-1,5-pentanediol.

The lower limit of the content proportion of the branched alkylene glycol in the glycol serving as the reaction raw material is not particularly limited, but is, for example, 10 mol% or more, preferably 30 mol% or more, more preferably 50 mol% or more.

Similarly, the upper limit of the content proportion of the branched alkylene glycol in the glycol serving as the raw material is not particularly limited, but is, for example, 95 mol% or less, preferably 90 mol% or less, more preferably 70 mol% or less, still more preferably 50 mol% or less.

The glycol serving as the reaction raw material has only to include 1,5-pentanediol and the branched alkylene glycol, and may a glycol other than 1,5-pentanediol and the branched alkylene glycol.

For example, the glycol serving as the reaction raw material may substantially consist of 1,5-pentanediol and the branched alkylene glycol. Here, "substantially consist of" means that the total content of 1,5-pentanediol and the branched alkylene glycol in the glycol serving as the reaction raw material is 80 mol% or more, 90 mol% or more, or 95 mol% or more, and it is preferred that the glycol serving as the reaction raw material consist of only 1,5-pentanediol and the branched alkylene glycol.

The above-mentioned aliphatic dicarboxylic acid having 4 to 14 carbon atoms is preferably an alkylene dicarboxylic acid having 4 to 14 carbon atoms, more preferably an alkylene dicarboxylic acid having 6 to 12 carbon atoms.

Examples of the alkylene dicarboxylic acid having 4 to 14 carbon atoms include succinic acid, glutaric acid, adipic acid, azelaic acid, sebacic acid, dodecanedicarboxylic acid (dodecanedioic acid), cyclohexanedicarboxylic acid, and hexahydrophthalic acid. Among these, adipic acid, azelaic acid, sebacic acid, and dodecanedioic acid are more preferred, adipic acid and sebacic acid are further preferred, and adipic acid is particularly preferred.

One kind of the alkylene dicarboxylic acid having 4 to 14 carbon atoms serving as the reaction raw material for the polyester of the present invention may be used alone, or two or more kinds thereof may be used in combination.

The above-mentioned monoalcohol having 4 to 18 carbon atoms is preferably an aliphatic monoalcohol having 4 to 18 carbon atoms.

Examples of the aliphatic monoalcohol having 4 to 18 carbon atoms include butanol, heptanol, hexanol, cyclohexanol, octanol, 2-ethylhexanol, isononyl alcohol, nonanol, decanol, undecanol, and dodecanol.

One kind of the monoalcohol having 4 to 18 carbon atoms serving as the reaction raw material for the polyester of the present invention may be used alone, or two or more kinds thereof may be used in combination.

The above-mentioned monocarboxylic acid having 2 to 21 carbon atoms is preferably an aliphatic monocarboxylic acid having 2 to 21 carbon atoms.

Examples of the aliphatic monocarboxylic acid having 2 to 21 carbon atoms include acetic acid, caproic acid, 2-ethylhexanoic acid, caprylic acid, capric acid, lauric acid, myristic acid, pentadecylic acid, palmitic acid, margaric acid, stearic acid, and arachidic acid.

The monocarboxylic acid having 2 to 21 carbon atoms may be a hydrogenated vegetable oil fatty acid. Examples of the hydrogenated vegetable oil fatty acid include a hydrogenated coconut oil fatty acid, a hydrogenated palm kernel oil fatty acid, a hydrogenated palm oil fatty acid, a hydrogenated olive oil fatty acid, a hydrogenated castor oil fatty acid, and a hydrogenated rapeseed oil fatty acid. These fatty acids are obtained by decomposing and hydrogenating oil solutions obtained from coconut palm, palm kernel, palm, olive, castor bean, and rapeseed, respectively, and are each a mixture of two or more kinds of long-chain aliphatic monocarboxylic acids containing an aliphatic monocarboxylic acid having 8 to 21 carbon atoms.

In addition, the above-mentioned vegetable oil fatty acids that are not hydrogenated may be used within a range that does not impair the effects of the present invention. Furthermore, the vegetable oil fatty acid is not limited to the foregoing.

For the polyester of the present invention, the glycol having 2 to 18 carbon atoms, the aliphatic dicarboxylic acid having 4 to 14 carbon atoms, and the monoalcohol having 4 to 18 carbon atoms and/or the monocarboxylic acid having 2 to 21 carbon atoms are used as the reaction raw materials, the glycol has only to include 1,5-pentanediol and the alkylene glycol having a branched alkylene chain having 4 to 18 carbon atoms, and another reaction raw material other than these may be used within a range that does not impair the effects of the present invention.

The reaction raw materials for the polyester of the present invention preferably substantially consists of the glycol having 2 to 18 carbon atoms, the aliphatic dicarboxylic acid having 4 to 14 carbon atoms, and the monoalcohol having 4 to 18 carbon atoms and/or the monocarboxylic acid having 2 to 21 carbon atoms, more preferably consists of only the glycol having 2 to 18 carbon atoms, the aliphatic dicarboxylic acid having 4 to 14 carbon atoms, and the monoalcohol having 4 to 18 carbon atoms and/or the monocarboxylic acid having 2 to 21 carbon atoms.

The polyester of the present invention includes one or more selected from the group consisting of a mixture of compounds each represented by the following formula (1) in which values of p are different from each other, a mixture of compounds each represented by the following formula (2) in which values of q are different from each other, and a mixture of compounds each represented by the following formula (3) in which values of r are different from each other.

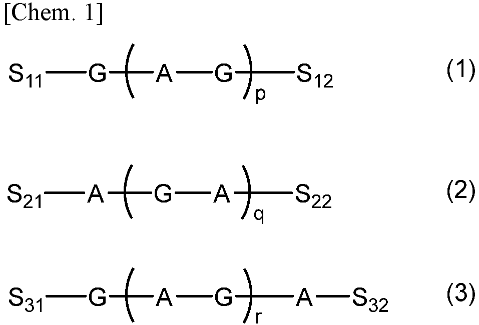

In the above-mentioned formulae (1) to (3), G is a glycol residue having 2 to 18 carbon atoms.

A is an aliphatic dicarboxylic acid residue having 2 to 12 carbon atoms.

S₁₁ and S₁₂ are each independently a monocarboxylic acid residue having 1 to 20 carbon atoms.

S₂₁ and S₂₂ are each independently a monoalcohol residue having 4 to 18 carbon atoms.

S₃₁ is a monocarboxylic acid residue having 1 to 20 carbon atoms.

S₃₂ is a monoalcohol residue having 4 to 18 carbon atoms.

p, q, and r are each independently an integer.

The "carboxylic acid residue" in the present invention refers to an organic group obtained by removing a carboxy group possessed by a carboxylic acid. In addition, the number of carbon atoms in the "carboxylic acid residue" does not include the number of a carbon atom in the carboxy group.

The "alcohol residue" in the present invention refers to an organic group obtained by removing a hydroxy group from an alcohol.

The "glycol residue" in the present invention refers to an organic group obtained by removing a hydroxy group from a glycol.

The glycol residue having 2 to 18 carbon atoms of G is a group corresponding to the glycol having 2 to 18 carbon atoms serving as the reaction raw material for the polyester of the present invention.

The aliphatic dicarboxylic acid residue having 2 to 12 carbon atoms of A is a group corresponding to the aliphatic dicarboxylic acid having 4 to 14 carbon atoms serving as the reaction raw material for the polyester of the present invention.

The monocarboxylic acid residue having 1 to 20 carbon atoms of each of S₁₁, S₁₂, and S₃₁ is a group corresponding to the monocarboxylic acid having 2 to 21 carbon atoms serving as the reaction raw material for the polyester of the present invention.

The monoalcohol residue having 4 to 18 carbon atoms of each of S₂₁, S₂₂, and S₃₂ is a group corresponding to the monoalcohol having 4 to 18 carbon atoms serving as the reaction raw material for the polyester of the present invention.

The upper limit of each of p, q, and r is not particularly limited, but is, for example, 30.

The average value of p is, for example, within the range of 3 to 20, the average value of q is, for example, within the range of 3 to 20, and the average value of r is, for example, within the range of 3 to 20.

In addition, the average value of each of p, q, and r can be determined from the number-average molecular weight of the polyester.

For the polyester of the present invention, in gel permeation chromatography measurement, the total area ratio of a component with p being 0 in the compound represented by the formula (1), a component with q being 0 in the compound represented by the formula (2), and a component with r being 0 in the compound represented by the formula (3) is within the range of 0.5 to 3.0 mass%.

The number-average molecular weight (Mn) of the polyester of the present invention is, for example, 500 to 6,000, preferably 500 to 4,000, more preferably 1,000 to 4,000, still more preferably 1,000 to 3,700.

The number-average molecular weight (Mn) of the polyester of the present invention is determined by a method described in Examples.

The acid value of the polyester of the present invention is preferably 2.0 or less, more preferably 1.0 or less.

The hydroxy value of the polyester of the present invention is preferably 15 or less, more preferably 10 or less.

The viscosity of the polyester of the present invention is preferably 7,000 Pa·s or less, more preferably 5,000 mPa·s or less.

The acid value, hydroxy value, and viscosity of the polyester of the present invention are determined by methods described in Examples.

### [Method for Producing Plasticizer for Vinyl Chloride Resin]

The plasticizer for a vinyl chloride resin of the present invention can be produced by allowing a glycol having 2 to 18 carbon atoms (the glycol includes 1,5-pentanediol and an alkylene glycol having a branched alkylene chain having 4 to 18 carbon atoms, and the content proportion of the 1,5-pentanediol in the glycol is within the range of 5 to 90 mol%) to react with an aliphatic dicarboxylic acid having 4 to 14 carbon atoms, a monoalcohol having 4 to 18 carbon atoms and/or a monocarboxylic acid having 2 to 21 carbon atoms to synthesize a polyester.

The polyester represented by the formula (1) can be obtained, for example, by the following method.

Method 1: A method in which a monocarboxylic acid, a dicarboxylic acid, and a glycol constituting each residue of the polyester represented by the formula (1) are collectively prepared and allowed to react with each other.

Method 2: A method in which a dicarboxylic acid and a glycol constituting each residue of the polyester represented by the formula (1) are allowed to react with each other under a condition where the equivalent of a hydroxy group is larger than the equivalent of a carboxy group to obtain a polyester having a hydroxy group at the terminal of the main chain, and the obtained polyester resin is allowed to react with monocarboxylic acids constituting S₁₁ and S₁₂.

The polyester represented by the formula (2) can be obtained, for example, by the following method.

Method 3: A method in which a monoalcohol, a dicarboxylic acid, and a glycol constituting each residue of the polyester represented by the formula (2) are collectively prepared and allowed to react with each other.

Method 4: A method in which a dicarboxylic acid and a glycol constituting each residue of the polyester represented by the formula (2) are allowed to react with each other under a condition where the equivalent of a carboxy group is larger than the equivalent of a hydroxy group to obtain a polyester having a carboxy group at the terminal of the main chain, and the obtained polyester resin is allowed to react with monoalcohols constituting S₂₁ and S22.

The polyester represented by the formula (3) can be obtained, for example, by the following method.

Method 4: A method in which a monoalcohol, a monocarboxylic acid, a dicarboxylic acid, and a glycol constituting each residue of the polyester represented by the formula (3) are collectively prepared and reacted.

Method 5: A method in which a dicarboxylic acid and a glycol constituting each residue of the polyester represented by the formula (3) are allowed to react with each other under a condition where the equivalent of a carboxy group is equal to the equivalent of a hydroxy group to obtain a polyester having a carboxy group at one terminal of the main chain and a hydroxy group at the other terminal of the main chain, and the obtained polyester is allowed to react with a monoalcohol and a monocarboxylic acid constituting S₃₁ and S₃₂.

In the synthesis of the polyester, the above-mentioned reaction may be an esterification reaction, for example, within the temperature range of 180 to 250°C for 5 to 25 hours, as required, in the presence of an esterification catalyst.

In addition, conditions such as the temperature and the time of the esterification reaction are not particularly limited, and may be appropriately determined.

Examples of the esterification catalyst include titanium-based catalysts such as tetraisopropyl titanate and tetrabutyl titanate; tin-based catalysts such as dibutyl tin oxide; and organic sulfonic acid-based catalysts such as p-toluenesulfonic acid.

The usage amount of the esterification catalyst may be appropriately determined, but in general, the usage amount is preferably within the range of 0.001 to 0.1 parts by mass with respect to a whole amount of the reaction raw materials of 100 parts by mass.

The obtained polyester is preferably subjected to additional steam stripping treatment.

The steam stripping treatment is treatment in which the obtained polyester is brought into contact with steam to remove an unreacted component, the catalyst, and a low-molecular-weight component contained in the polyester.

The steam stripping treatment is performed by passing the obtained polyester through a stripping column provided with a perforated plate that ejects steam, the stripping treatment temperature is, for example, within the range of 100 to 180°C, and the stripping treatment pressure may be set within the range of 0.005 to 0.03 STMkg/hr/kg. The stripping time may be set, for example, within the range of 2 to 10 hours.

### [Vinyl Chloride Resin Composition]

A vinyl chloride resin composition of the present invention contains the plasticizer for a vinyl chloride resin of the present invention and a vinyl chloride resin. The vinyl chloride resin in the present invention contains a homopolymer of vinyl chloride, a homopolymer of vinylidene chloride, a copolymer containing as an essential component vinyl chloride, a copolymer containing as an essential component vinylidene chloride, and the like.

When the vinyl chloride resin is the copolymer containing as an essential component vinyl chloride or the copolymer containing as an essential component vinylidene chloride, examples of a comonomer that may be copolymerized include α-olefins such as ethylene, propylene, and 1-butene; conjugated dienes such as butadiene and isoprene; vinyl alcohol, styrene, acrylonitrile, vinyl acetate, vinyl propionate, fumaric acid, a fumarate ester, maleic acid, a maleate ester, maleic acid anhydride, acrylic acid, an acrylate ester, methacrylic acid, a methacrylate ester, and isoprenol.

The polymerization degree of the vinyl chloride resin is generally 300 to 5,000, preferably 400 to 3,500, more preferably 700 to 3,000. When the polymerization degree of the vinyl chloride resin is within the range, a molded product having high heat resistance is obtained, and a vinyl chloride resin composition having excellent processability can be obtained.

The vinyl chloride resin can be produced by a publicly known method, and examples of the method include suspension polymerization in the presence of an oil-soluble polymerization catalyst, and emulsion polymerization in an aqueous medium in the presence of a water-soluble polymerization catalyst.

A commercially available product may be used as the vinyl chloride resin. Examples of a commercially available product of a vinyl chloride-based resin include TH-640, TH-700, and TH-800 (all manufactured by Taiyo Vinyl Corporation); S-1004, S-1008, and PSH-10 (all manufactured by Kaneka Corporation); TK-700, TK-800, and TK-1300 (all manufactured by Shin-Etsu Polymer Co., Ltd.); and ZEST800Z, ZEST1000Z, and ZEST1300Z (all manufactured by Shin Daiichi Vinyl Co., Ltd.).

From the viewpoint of compatibility with a vinyl chloride resin, and the like, the content of the plasticizer for a vinyl chloride resin of the present invention in the vinyl chloride resin composition of the present invention is preferably within the range of 10 to 150 parts by mass, more preferably within the range of 30 to 120 parts by mass, still more preferably within the range of 50 to 120 parts by mass, particularly preferably within the range of 70 to 120 parts by mass, with respect to 100 parts by mass of the vinyl chloride resin.

The vinyl chloride resin composition of the present invention has only to contain a vinyl chloride resin and the plasticizer for a vinyl chloride resin of the present invention, and may contain a plasticizer (another plasticizer) other than the plasticizer for a vinyl chloride resin of the present invention, another additive, and the like.

Examples of the other plasticizer include benzoate esters such as diethylene glycol dibenzoate; phthalate esters such as dibutyl phthalate (DBP), di-2-ethylhexyl phthalate (DOP), diisononyl phthalate (DINP), diisodecyl phthalate (DIDP), diundecyl phthalate (DUP), and ditridecyl phthalate (DTDP); terephthalate esters such as bis(2-ethylhexyl) terephthalate (DOTP); isophthalate esters such as bis(2-ethylhexyl) isophthalate (DOIP); pyromellitate esters such as tetra-2-ethylhexyl pyromellitate (TOPM); aliphatic dibasic acid esters such as azelaic acid derivatives including di-2-ethylhexyl adipate (DOA), diisononyl adipate (DINA), diisodecyl adipate (DIDA), di-(2-ethylhexyl) azelate, diisooctyl azelate, and di-n-hexyl azelate; phosphate esters such as tri-2-ethylhexyl phosphate (TOP) and tricresyl phosphate (TCP); alkyl esters of polyhydric alcohols such as pentaerythritol; polyesters having a molecular weight of 800 to 4,000 synthesized by polyesterification of a dibasic acid, such as adipic acid, and a glycol; epoxidized esters such as epoxidized soy bean oil and epoxidized linseed oil; alicyclic dibasic acids such as diisononyl hexahydrophthalate; fatty acid glycol esters such as 1,4-butanediol dicaprate; tributyl acetylcitrate (ATBC); chlorinated paraffin such as chlorinated paraffin wax and chlorinated n-paraffin; chlorinated fatty acid esters such as a chlorinated stearate ester; and higher fatty acid esters such as butyl oleate.

Among the other plasticizers, one or more kinds selected from a trimellitate ester plasticizer and a sebacic acid derivative plasticizer are preferably used.

Examples of the trimellitate ester plasticizer include linear trimellitate esters in which an alkyl group constituting an ester is linear, such as trimethyl trimellitate, triethyl trimellitate, tri-n-propyl trimellitate, tri-n-butyl trimellitate, tri-n-pentyl trimellitate, tri-n-hexyl trimellitate, tri-n-heptyl trimellitate, tri-n-octyl trimellitate, tri-n-nonyl trimellitate, tri-n-decyl trimellitate, tri-n-undecyl trimellitate, tri-n-dodecyl trimellitate, tri-n-tridecyl trimellitate, tri-n-tetradecyl trimellitate, tri-n-pentadecyl trimellitate, tri-n-hexadecyl trimellitate, tri-n-heptadecyl trimellitate, tri-n-stearyl trimellitate, and a tri-n-alkyl ester of trimellitic acid (wherein the numbers of carbon atoms in alkyl groups possessed by the tri-n-alkyl ester of trimellitic acid may be different from each other in one molecule); and branched trimellitate esters in which an alkyl group constituting an ester is branched, such as tri-i-propyl trimellitate, tri-i-butyl trimellitate, tri-i-pentyl trimellitate, tri-i-hexyl trimellitate, tri-i-heptyl trimellitate, tri-i-octyl trimellitate, tri-i-(2-ethylhexyl) trimellitate, tri-i-nonyl trimellitate, tri-i-decyl trimellitate, tri-i-undecyl trimellitate, tri-i-dodecyl trimellitate, tri-i-tridecyl trimellitate, tri-i-tetradecyl trimellitate, tri-i-pentadecyl trimellitate, tri-i-hexadecyl trimellitate, tri-i-heptadecyl trimellitate, tri-i-octadecyl trimellitate, and a tri-i-alkyl ester of trimellitic acid (in which the numbers of carbon atoms in alkyl groups possessed by the trialkyl ester of trimellitic acid may be different from each other in one molecule).

Examples of the sebacic acid derivative plasticizer include di-n-butyl sebacate, di-(2-ethylhexyl) sebacate, diisodecyl sebacate, and di-(2-butyloctyl) sebacate.

One kind of the other plasticizers may be used alone, or two or more kinds thereof may be used in combination.

Among the above-mentioned other plasticizers, the trimellitate ester and the sebacic acid derivative are preferred from the viewpoint of achieving favorable tensile elongation and cold resistance.

When the other plasticizer is used for the vinyl chloride resin composition of the present invention, the content of the other plasticizer is, for example, within the range of 10 to 300 parts by mass, preferably within the range of 20 to 200 parts by mass, with respect to 100 parts by mass of the plasticizer for a vinyl chloride resin of the present invention.

Examples of the other additive include a flame retardant, a stabilizer, a stabilization aid, a colorant, a processing aid, a filler, an antioxidant (antiaging agent), an ultraviolet absorber, a light stabilizer, a lubricant, an antistat, and a crosslinking aid.

Examples of the flame retardant include inorganic compounds such as aluminum hydroxide, antimony trioxide, magnesium hydroxide, and zinc borate; phosphorus-based compounds such as cresyl diphenyl phosphate, tris(chloroethyl) phosphate, tris(chloropropyl) phosphate, and tris(dichloropropyl) phosphate; and halogen-based compounds such as chlorinated paraffin.

When the flame retardant is mixed in the vinyl chloride resin composition, the amount of the mixed flame retardant is generally within the range of 0.1 to 20 parts by mass with respect to 100 parts by mass of the vinyl chloride resin.

Examples of the stabilizer include metal soap compounds such as lithium stearate, magnesium stearate, magnesium laurate, calcium ricinoleate, calcium stearate, barium laurate, barium ricinoleate, barium stearate, zinc octylate, zinc laurate, zinc ricinoleate, and zinc stearate; organotin-based compounds such as dimethyltin bis(2-ethylhexyl thioglycolate), dibutyltin maleate, dibutyltin bis(butyl maleate), and dibutyltin dilaurate; antimony mercaptide compounds; and lanthanoid-containing compounds such as lanthanum oxide and lanthanum hydroxide.

When the stabilizer is mixed in the vinyl chloride resin composition, the amount of the mixed stabilizer is generally within the range of 0.1 to 20 parts by mass with respect to 100 parts by mass of the vinyl chloride resin.

Examples of the stabilization aid include phosphite-based compounds such as triphenyl phosphite, monooctyldiphenyl phosphite, and tridecyl phosphite; β-diketone compounds such as acetylacetone and benzoylacetone; polyol compounds such as glycerin, sorbitol, pentaerythritol, and polyethylene glycol; perchlorate salt compounds such as barium perchlorate and sodium perchlorate; hydrotalcite compounds; and zeolite.

When the stabilization aid is mixed in the vinyl chloride resin composition, the amount of the mixed stabilization aid is generally within the range of 0.1 to 20 parts by mass with respect to 100 parts by mass of the vinyl chloride resin.

Examples of the colorant include carbon black, lead sulfide, white carbon, titanium white, lithopone, red iron oxide, antimony sulfide, chrome yellow, chrome green, cobalt blue, and molybdenum orange.

When the colorant is mixed in the vinyl chloride resin composition, the amount of the mixed colorant is generally within the range of 1 to 100 parts by mass with respect to 100 parts by mass of the vinyl chloride resin.

Examples of the processing aid include liquid paraffin, polyethylene wax, stearic acid, stearamide, ethylene bis(stearamide), butyl stearate, and calcium stearate.

When the processing aid is mixed in the vinyl chloride resin composition, the amount of the mixed processing aid is generally within the range of 0.1 to 20 parts by mass with respect to 100 parts by mass of the vinyl chloride resin.

Examples of the filler include metal oxides such as calcium carbonate, silica, alumina, clay, talc, diatomaceous earth, and ferrite; fibers and powders of glass, carbon, metal, and the like; glass beads, graphite, aluminum hydroxide, barium sulfate, magnesium oxide, magnesium carbonate, magnesium silicate, and calcium silicate.

When the filler is mixed in the vinyl chloride resin composition, the amount of the mixed filler is generally within the range of 1 to 100 parts by mass with respect to 100 parts by mass of the vinyl chloride resin.

Examples of the antioxidant include phenolic compounds such as 2,6-di-tert-butyl phenol, tetrakis[methylene-3-(3,5-tert-butyl-4-hydroxyphenol)propionate]methane, and 2-hydroxy-4-methoxybenzophenone; sulfur-based compounds such as alkyl disulfide, a thiodipropionate ester, and benzothiazole; phosphoric acid-based compounds such as tris(nonylphenyl) phosphite, diphenylisodecyl phosphite, triphenyl phosphite, and tris(2,4-di-tert-butylphenyl) phosphite; organometallic compounds such as zinc dialkyldithiophosphate and zinc diaryldithiophosphate.

When the antioxidant is mixed in the vinyl chloride resin composition, the amount of the mixed antioxidant is generally within the range of 0.2 to 20 parts by mass with respect to 100 parts by mass of the vinyl chloride resin.

Examples of the ultraviolet absorber include salicylate-based compounds such as phenyl salicylate and p-tert-butylphenyl salicylate; benzophenone-based compounds such as 2-hydroxy-4-n-octoxybenzophenone and 2-hydroxy-4-n-methoxybenzophenone; benzotriazole-based compounds such as 5-methyl-1H-benzotriazole and 1-dioctylaminomethylbenzotriazole, and cyanoacrylate-based compounds.

When the ultraviolet absorber is mixed in the vinyl chloride resin composition, the amount of the mixed ultraviolet absorber is generally within the range of 0.1 to 10 parts by mass with respect to 100 parts by mass of the vinyl chloride resin.

An example of the light stabilizer is a hindered amine-based light stabilizer. Specific examples thereof include bis(2,2,6,6-tetramethyl-4-piperidyl) sebacate, bis(1,2,2,6,6-pentamethyl-4-piperidyl) sebacate and methyl 1,2,2,6,6-pentamethyl-4-piperidyl sebacate (mixture), bis(1,2,2,6,6-pentamethyl-4-piperidyl)[[3,5-bis(1,1-dimethylethyl)-4-hydroxyphenyl]methyl]butyl malonate, a reaction product of bis(2,2,6,6-tetramethyl-1-(octyloxy)-4-piperidyl) decanedioate and 1,1-dimethylethyl hydroperoxide with octane, 4-benzoyloxy-2,2,6,6-tetramethylpiperidine, a mixture of 2,2,6,6-tetramethyl-4-piperidinol and an ester of a higher fatty acid, tetrakis(2,2,6,6-tetramethyl-4-piperidyl)-1,2,3,4-butanetetracarboxylate, tetrakis(1,2,2,6,6-pentamethyl-4-piperidyl)-1,2,3,4-butanetetracarboxylate, a polycondensation product of dimethyl succinate and 4-hydroxy-2,2,6,6-tetramethyl-1-piperidine ethanol, poly{(6-(1,1,3,3-tetramethylbutyl)amino-1,3,5-triazine-2,4-diyl){(2,2,6,6-tetramethyl-4-piperidyl)imino}hexamethylene{(2,2,6,6-tetramethyl-4-piperidyl)imino}}, a polycondensation product of dibutylamine-1,3,5-triazine-N,N'-bis(2,2,6,6-tetramethyl-4-piperidyl-1,6-hexamethylenediamine and N-(2,2,6,6-tetramethyl-4-piperidyl)butylamine, and N,N',N",N‴-tetrakis-(4,6-bis(butyl-(N-methyl-2,2,6,6-tetramethylpiperidin-4-yl)amino)-triazin-2-yl)-4,7-diazadecane-1,10-amine.

When the light stabilizer is mixed in the vinyl chloride resin composition, the amount of the mixed light stabilizer is generally within the range of 0.1 to 10 parts by mass with respect to 100 parts by mass of the vinyl chloride resin.

Examples of the lubricant include silicone, liquid paraffin, paraffin wax, fatty acid metal salts such as a stearic acid metal salt and a lauric acid metal salt; fatty acid amides, fatty acid wax, and higher fatty acid wax.

When the lubricant is mixed in the vinyl chloride resin composition, the amount of the mixed lubricant is generally within the range of 0.1 to 10 parts by mass with respect to 100 parts by mass of the vinyl chloride resin.

Examples of the antistat include alkyl sulfonate-, alkyl ether carboxylate-, or dialkyl sulfosuccinate-based anionic antistats; nonionic antistats such as a polyethylene glycol derivative, a sorbitan derivative, and a diethanolamine derivative; cationic antistats such as alkylamideamine- or alkyldimethylbenzyl-based quaternary ammonium salts, and an alkylpyridinium-based organic acid salt or hydrochloric acid salt; and alkyl betaine- or alkyl imidazoline-based amphoteric antistats.

When the antistat is mixed in the vinyl chloride resin composition, the amount of the mixed antistat is generally within the range of 0.1 to 10 parts by mass with respect to 100 parts by mass of the vinyl chloride resin.

Examples of the crosslinking aid include polyfunctional monomers such as tetraethylene glycol di(meth)acrylate, divinylbenzene diallyl phthalate, triallyl isocyanurate, trimethylolpropane triacrylate, tetramethylolmethane tetramethacrylate, and trimethoxyethoxy vinyl silane.

When the crosslinking aid is mixed in the vinyl chloride resin composition, the amount of the mixed crosslinking aid is generally within the range of 0.5 to 30 parts by mass with respect to 100 parts by mass of the vinyl chloride resin.

The vinyl chloride resin composition of the present invention can be produced by a publicly known method.

For example, the vinyl chloride resin composition of the present invention can be prepared by mixing the vinyl chloride resin, the plasticizer for a vinyl chloride resin of the present invention, and an optional component (the other plasticizer and the other additive) with a kneader such as a blender, a planetary mixer, or a Banbury mixer.

The vinyl chloride resin composition of the present invention is molded by a publicly known method such as vacuum molding, compression molding, extrusion molding, calendar molding, press molding, blow molding, powder molding, or powder slush molding to obtain a molded product.

A molded product obtained using the vinyl chloride resin composition of the present invention may be used, for example, for an insulation tape, an insulation sheet, a wiring connector, an electrical lead-covering material, a pipe such as a water pipe, a joint for pipe, a gutter such as a rainwater gutter, a window frame siding, a flat plate, a wave plate, an automotive material such as an automotive underbody coating, a dashboard, an instrument panel, a console, a door sheet, an undercarpet, a trunk sheet, or a door trim, various leathers, a decoration sheet, an agriculture film, a food packaging film, various expanded products, a hose, a medical tube, a tube for food, a gasket for refrigerator, a packing, a wallpaper, a floor material, a boot, a curtain, a sole, a glove, a waterstop, a toy, a decorative plate, a blood bag, an infusion bag, a tarpaulin, a mat, an impermeable flexible membrane, a geosynthetic sheet, a roofing, a waterproof sheet, an industrial tape, a glass film, a scraper, and the like.

### [Urethane/Vinyl Chloride Laminate]

The above-mentioned automotive dashboard includes a laminate part of a vinyl chloride resin layer and a urethane resin layer, and the molded product obtained using the vinyl chloride resin composition of the present invention is particularly suitable for the vinyl chloride resin layer of the laminate.

The laminate of the vinyl chloride resin layer containing the plasticizer for a vinyl chloride resin of the present invention and the urethane resin layer is called the "laminate of the present invention" and the respective layers will be described below.

The vinyl chloride resin layer is a layer obtained by molding the above-mentioned vinyl chloride resin composition of the present invention, and a component contained in the vinyl chloride resin composition and a molding method are as described above.

The thickness of the vinyl chloride resin layer may be optionally set, and is, for example, 0.2 to 2.0 mm, preferably 0.5 to 1.5 mm.

The above-mentioned urethane resin layer is a layer formed of a polyurethane foam, and can be formed using a foam raw material containing a polyol, a polyisocyanate, a crosslinking agent, a catalyst, a foaming agent, a foam stabilizer, and the like.

The polyol is not particularly limited, and a publicly known polyol used in the production of the polyurethane foam can be used. Specific examples of the polyol include polyether polyols such as polypropylene glycol (PPG), polyethylene glycol (PEG), and polyoxytetramethylene glycol (PTMG); a polyester polyol, and a polymer polyol, and a polyether polyol and a polymer polyol are preferred.

One kind of the polyols may be used alone, or two or more kinds thereof may be used in combination.

As the polyisocyanate, diphenylmethane diisocyanate-based (hereinafter sometimes abbreviated as "MDI") polyisocyanate and a tolylene diisocyanate-based (hereinafter sometimes abbreviated as "TDI") polyisocyanate may be used in combination.

Examples of the MDI-based polyisocyanate include 2,2'-MDI, 2,4'-MDI, 4,4'-MDI, polymethylene polyphenylene polyisocyanate, and urethane modified products thereof.

Examples of the TDI-based polyisocyanate include 2,4-TDI, 2,6-TDI, and carbodiimide modified products thereof.

As the crosslinking agent, a crosslinking agent used in the production of the polyurethane foam may be generally used without particular restriction. As this crosslinking agent, a compound having a molecular weight of less than 500 and at least two active hydrogen groups, such as a low molecular weight alcohol, a low molecular weight amine, or a low molecular weight aminoalcohol may be used. The crosslinking agent is preferably a low molecular weight aminoalcohol, which is allowed to slowly react with an isocyanate group, more preferably diethanolamine.

One kind of the crosslinking agents may be used alone, or two or more kinds thereof may be used in combination.

The amount of the crosslinking agent to be mixed is preferably 10 parts by mass or less, and particularly preferably 5 parts by mass or less (usually 1 part by mass or more) when the amount of the polyol is set to 100 parts by mass.

As the catalyst, a catalyst used in the production of the polyurethane foam may be generally used without particular restriction. As this catalyst, a tertiary amine, a diazabicycloalkene compound or a salt thereof, an organometallic compound, or the like may be used, and a tertiary amine is preferred.

Examples of the above-mentioned tertiary amine include triethylenediamine, triethylamine, tri-n-butylamine, bis(2-dimethylaminoethyl) ether, N,N,N',N'-tetramethylhexamethylenediamine, and 1,2-dimethylimidazole. Examples of the organometallic compound include metal salts of various metals such as tin, lead, and zirconium with organic acids such as octenoic acid and naphthenic acid, and examples of the metal salts include dibutyltin dilaurate, dibutyltin diacetylacetonate, and zirconium tetraacetylacetonate. One kind of the catalysts may be used alone, or two or more kinds thereof may be used in combination. The amount of the catalyst to be mixed is preferably 0.03 to 2.0 parts by mass, and particularly preferably 0.03 to 1.5 parts by mass when the amount of the polyol is set to 100 parts by mass. When the amount of the catalyst to be mixed is 0.03 to 2.0 parts by mass, curing of a foam raw material is easy, and satisfactory moldability is achieved.

As the foaming agent, a foaming agent used in the production of the polyurethane foam may be generally used without particular restriction. As the foaming agent, water is often used. In addition to this water, for example, two kinds of foaming agents: an inactive low-boiling-point solvent and a reactive foaming agent are given as examples.

Examples of the inactive low boiling point include dichloromethane, hydrochlorofluorocarbon, hydrofluorocarbon, and isopentane.

An example of the reactive foaming agent is an azo compound, which is decomposed at a temperature higher than room temperature to generate a gas. One kind of the foaming agents may be used alone, or two or more kinds thereof may be used in combination. The amount of the foaming agent to be mixed is preferably 1.0 to 5.0 parts by mass, and particularly preferably 1.5 to 4.0 parts by mass when the amount of the polyol is set to 100 parts by mass. When the amount of the foaming agent to be mixed is 1.0 to 5.0 parts by mass, independent foam is formed, and depression and the like are not formed on the foam surface.

As the foam stabilizer, a foam stabilizer used in the production of the polyurethane foam may be generally used without particular restriction. Examples of the foam stabilizer include a polydimethylsiloxane-polyalkylene oxide block copolymer and a vinyl silane-polyalkylene polyol copolymer.

One kind of the foam stabilizers may be used alone, or two or more kinds thereof may be used in combination.

The amount of the foam stabilizer to be mixed is preferably 3.0 parts by mass or less, and particularly preferably 2.0 parts by mass or less (usually 0.5 parts by mass or more) when the amount of the polyol is set to 100 parts by mass.

In the production of the polyurethane foam forming the urethane resin layer, various additives and aids, such as an antioxidant, an antiaging agent such as a ultraviolet absorber, a filler such as calcium carbonate or barium sulfate, an internal release agent, a flame retardant, a plasticizer, a colorant, and an antifungal agent, may be used as required.

A method for forming a polyurethane foam layer is not particularly limited. For example, a polyurethane foam layer can be formed by injecting the foam raw material into a space between an upper mold and a lower mold by a vacuum molding method or the like under a condition where the isocyanate index is 70 to 140, and particularly 80 to 120, and causing the foam raw material to react and cure. In addition, the reaction and curing can be advanced by heating the foam raw material and/or a mold as required. Further, the foam raw material is injected into a space between molds to which a release agent is preferably applied using at least one mixing head, usually caused to react, for example, at a temperature range of normal temperature to about 70°C, foam, and cure. Thus, the polyurethane foam layer can be formed.

The thickness of the urethane resin layer may be optionally set, and is, for example, 5 to 15 mm, preferably 7 to 12 mm.

### Examples

Hereinafter, the present invention will be specifically described by Examples and Comparative Examples.

In addition, the present invention is not limited to the following examples.

In Examples of the present application, values of acid value, viscosity, and solidification point are values evaluated by the following methods.

### <Method for Measuring Acid Value>

The acid value was measured by a method in accordance with JIS K0070-1992.

### <Method for Measuring Viscosity>

The viscosity was measured by a method in accordance with JIS K6901-1986.

### <Method for Measuring Solidification Point>

The solidification point was measured by a method in accordance with ASTM D7346.

In Examples of the present application, the number-average molecular weight of a polyester is a value calculated in terms of polystyrene based on GPC measurement, and measurement conditions are as described below.

### [GPC Measurement Conditions]

Measuring apparatus: High-speed GPC device "HLC-8320GPC" manufactured by Tosoh Corporation
Column: "TSK GURDCOLUMN SuperHZ-L" manufactured by Tosoh Corporation + "TSK gel SuperHZM-M" manufactured by Tosoh Corporation + "TSK gel SuperHZM-M" manufactured by Tosoh Corporation + "TSK gel SuperHZ-2000" manufactured by Tosoh Corporation + "TSK gel SuperHZ-2000" manufactured by Tosoh Corporation
Detector: RI (differential refractometer)
Data processing: "EcoSEC Data Analysis version 1.07" manufactured by Tosoh Corporation
Column temperature: 40°C
Developing solvent: Tetrahydrofuran
Flow rate: 0.35 mL/min
Measurement sample: A measurement sample was obtained by dissolving 7.5 mg of a sample in 10 mL of tetrahydrofuran and filtering the obtained solution through a microfilter.
Injection volume of sample: 20 µL
Standard sample: a monodisperse polystyrene having a known molecular weight was used in accordance with a measurement manual of "HLC-8320GPC" described above.

### (Monodisperse Polystyrene)

"A-300" manufactured by Tosoh Corporation
"A-500" manufactured by Tosoh Corporation
"A-1000" manufactured by Tosoh Corporation
"A-2500" manufactured by Tosoh Corporation
"A-5000" manufactured by Tosoh Corporation
"F-1" manufactured by Tosoh Corporation
"F-2" manufactured by Tosoh Corporation
"F-4" manufactured by Tosoh Corporation
"F-10" manufactured by Tosoh Corporation
"F-20" manufactured by Tosoh Corporation
"F-40" manufactured by Tosoh Corporation
"F-80" manufactured by Tosoh Corporation
"F-128" manufactured by Tosoh Corporation
"F-288" manufactured by Tosoh Corporation

### (Example 1: Synthesis of Polyester Plasticizer A)

Into a 2 L four-necked flask equipped with a thermometer, a stirrer, and a reflux condenser as a reactor, 292 g (2.00 mol) of adipic acid, 26 g (0.34 mol) of 1,2-propanediol, 141 g (1.36 mol) of 1,5-pentanediol, 105 g (0.81 mol) of 2-ethylhexanol, and 0.02 g of tetraisopropyl titanate as an esterification catalyst were loaded, and the temperature was increased in a stepwise manner to 230°C while the mixture was stirred under nitrogen flow. Heating was continued at 230°C until the acid value was 4 or less, and produced water was continuously removed. After a reaction, excess 2-ethylhexanol was distilled off under reduced pressure at 230 to 200°C to obtain 445 g of a polyester plasticizer A (Mn: 1,522, acid value: 0.2, viscosity: 790 mPa·s (25°C), solidification point: 6°C).

### (Example 2: Synthesis of Polyester Plasticizer B)

Into a 2 L four-necked flask equipped with a thermometer, a stirrer, and a reflux condenser as a reactor, 292 g (2.00 mol) of adipic acid, 64 g (0.85 mol) of 1,2-propanediol, 88 g (0.85 mol) of 1,5-pentanediol, 105 g (0.81 mol) of n-octanol, and 0.02 g of tetraisopropyl titanate as an esterification catalyst were loaded, and the temperature was increased in a stepwise manner to 230°C while the mixture was stirred under nitrogen flow. Heating was continued at 230°C until the acid value was 4 or less, and produced water was continuously removed. After a reaction, excess n-octanol was distilled off under reduced pressure at 230 to 200°C to obtain 441 g of a polyester plasticizer B (Mn: 1,582, acid value: 0.5, viscosity: 770 mPa·s (25°C), solidification point: -22°C).

### (Example 3: Synthesis of Polyester Plasticizer C)

Into a 2 L four-necked flask equipped with a thermometer, a stirrer, and a reflux condenser as a reactor, 292 g (2.00 mol) of adipic acid, 107 g (1.19 mol) of 2-methyl-1,3-propanediol, 53 g (0.51 mol) of 1,5-pentanediol, 105 g (0.81 mol) of n-octanol, and 0.02 g of tetraisopropyl titanate as an esterification catalyst were loaded, and the temperature was increased in a stepwise manner to 230°C while the mixture was stirred under nitrogen flow. Heating was continued at 230°C until the acid value was 4 or less, and produced water was continuously removed. After a reaction, excess n-octanol was distilled off under reduced pressure at 230 to 200°C to obtain 448 g of a polyester plasticizer C (Mn: 1,515, acid value: 0.2, viscosity: 780 mPa·s (25°C), solidification point: -19°C).

### (Example 4: Synthesis of Polyester Plasticizer D)

Into a 2 L four-necked flask equipped with a thermometer, a stirrer, and a reflux condenser as a reactor, 292 g (2.00 mol) of adipic acid, 101 g (1.33 mol) of 1,2-propanediol, 139 g (1.33 mol) of 1,5-pentanediol, 174 g (0.85 mol) of hydrogenated coconut oil fatty acid, and 0.02 g of tetraisopropyl titanate as an esterification catalyst were loaded, and the temperature was increased in a stepwise manner to 230°C while the mixture was stirred under nitrogen flow. Heating was continued at 230°C until the acid value was 4 or less, and produced water was continuously removed. Thus, 575 g of a polyester plasticizer D (Mn: 1,621, acid value: 0.3, viscosity: 766 mPa·s (25°C), solidification point: 10°C) was obtained.

### (Example 5: Synthesis of Polyester Plasticizer E)

Into a 2 L four-necked flask equipped with a thermometer, a stirrer, and a reflux condenser as a reactor, 404 g (2.00 mol) of sebacic acid, 61 g (0.80 mol) of 1,2-propanediol, 83 g (0.80 mol) of 1,5-pentanediol, 130 g (1.00 mol) of 2-ethylhexanol, and 0.02 g of tetraisopropyl titanate as an esterification catalyst were loaded, and the temperature was increased in a stepwise manner to 230°C while the mixture was stirred under nitrogen flow. Heating was continued at 230°C until the acid value was 4 or less, and produced water was continuously removed. After a reaction, excess 2-ethylhexanol was distilled off under reduced pressure at 230 to 200°C to obtain 570 g of a polyester plasticizer E (Mn: 1,560, acid value: 0.3, viscosity: 588 mPa·s (25°C), solidification point: -2°C).

### (Example 6: Synthesis of Polyester Plasticizer F)

Into a 2 L four-necked flask equipped with a thermometer, a stirrer, and a reflux condenser as a reactor, 404 g (2.00 mol) of sebacic acid, 61 g (0.80 mol) of 1,2-propanediol, 83 g (0.80 mol) of 1,5-pentanediol, 130 g (1.00 mol) of n-octanol, and 0.02 g of tetraisopropyl titanate as an esterification catalyst were loaded, and the temperature was increased in a stepwise manner to 230°C while the mixture was stirred under nitrogen flow. Heating was continued at 230°C until the acid value was 4 or less, and produced water was continuously removed. After a reaction, excess n-octanol was distilled off under reduced pressure at 230 to 200°C to obtain 572 g of a polyester plasticizer F (Mn: 1,435, acid value: 0.6, viscosity: 506 mPa·s (25°C), solidification point: 4°C).

### (Example 7: Synthesis of Polyester Plasticizer G)

Into a 2 L four-necked flask equipped with a thermometer, a stirrer, and a reflux condenser as a reactor, 303 g (1.50 mol) of sebacic acid, 143 g (1.88 mol) of 1,2-propanediol, 22 g (0.21 mol) of 1,5-pentanediol, 162 g (0.79 mol) of hydrogenated coconut oil fatty acid, and 0.02 g of tetraisopropyl titanate as an esterification catalyst were loaded, and the temperature was increased in a stepwise manner to 230°C while the mixture was stirred under nitrogen flow. Heating was continued at 230°C until the acid value was 4 or less, and produced water was continuously removed. Thus, 523 g of a polyester plasticizer G (Mn: 1,390, acid value: 0.2, viscosity: 590 mPa·s (25°C), solidification point: 14°C) was obtained.

### (Comparative Example 1: Synthesis of Polyester Plasticizer A')

Into a 2 L four-necked flask equipped with a thermometer, a stirrer, and a reflux condenser as a reactor, 292 g (2.00 mol) of adipic acid, 6.4 g (0.10 mol) of 1,2-propanediol, 166 g (1.60 mol) of 1,5-pentanediol, 109 g (0.84 mol) of 2-ethylhexanol, and 0.02 g of tetraisopropyl titanate as an esterification catalyst were loaded, and the temperature was increased in a stepwise manner to 230°C while the mixture was stirred under nitrogen flow. Heating was continued at 230°C until the acid value was 4 or less, and produced water was continuously removed. After a reaction, excess 2-ethylhexanol was distilled off under reduced pressure at 230 to 200°C to obtain 452 g of a polyester plasticizer A' (Mn: 1,588, acid value: 0.3, viscosity: 703 mPa·s (25°C), solidification point: 26°C).

### (Comparative Example 2: Synthesis of Polyester Plasticizer B')

Into a 2 L four-necked flask equipped with a thermometer, a stirrer, and a reflux condenser as a reactor, 292 g (2.00 mol) of adipic acid, 77 g (0.85 mol) of 1,4-butanediol, 88 g (0.85 mol) of 1,5-pentanediol, 109 g (0.84 mol) of 2-ethylhexanol, and 0.02 g of tetraisopropyl titanate as an esterification catalyst were loaded, and the temperature was increased in a stepwise manner to 230°C while the mixture was stirred under nitrogen flow. Heating was continued at 230°C until the acid value was 4 or less, and produced water was continuously removed. After a reaction, excess 2-ethylhexanol was distilled off under reduced pressure at 230 to 200°C to obtain 452 g of a polyester plasticizer B' (Mn: 1,518, acid value: 0.3, viscosity: 650 mPa·s (25°C), solidification point: 34°C).

### (Comparative Example 3: Synthesis of Polyester Plasticizer C')

Into a 2 L four-necked flask equipped with a thermometer, a stirrer, and a reflux condenser as a reactor, 292 g (2.00 mol) of adipic acid, 129 g (1.70 mol) of 1,2-propanediol, 109 g (0.84 mol) of 2-ethylhexanol, and 0.02 g of tetraisopropyl titanate as an esterification catalyst were loaded, and the temperature was increased in a stepwise manner to 230°C while the mixture was stirred under nitrogen flow. Heating was continued at 230°C until the acid value was 4 or less, and produced water was continuously removed. After a reaction, excess 2-ethylhexanol was distilled off under reduced pressure at 230 to 200°C to obtain 421 g of a polyester plasticizer B' (Mn: 1,412, acid value: 0.5, viscosity: 590 mPa·s (25°C), solidification point: -35°C).

### (Preparation of Vinyl Chloride Resin Composition (1))

100 parts by mass of a vinyl chloride resin composition (polymerization degree: 1,000, ZEST1000Z, manufactured by Shin Daiichi Vinyl Co., Ltd.), 50 parts by mass of the obtained polyester plasticizer A, and 4 parts by mass of a filler (Greg MP-677D (calcium-zinc-based composite stabilizer) available from Nissin Trading Co., Ltd.) were mixed to obtain a vinyl chloride resin composition (1). The following evaluations were carried out using the obtained vinyl chloride resin composition (1). The results are shown in Table 1.

### (Evaluation of Plasticization Performance of Plasticizer)

The prepared vinyl chloride resin composition (1) was kneaded with a two-roll mill heated to 170°C for 10 minutes, the kneaded vinyl chloride resin composition (1) was molded with a mold (mold with a thickness of 1.0 mm) for providing a molded product with a thickness of 1.0 mm and a press heated to 170°C to produce a sheet with a thickness of 1.0 mm.

For the obtained sheet, the 100% modulus (tensile stress at an elongation of 100%) and the elongation ratio at break were evaluated in accordance with JIS K6251:2010. Specifically, a tensile test was carried out using the 1.0 mm thick sheet under the following conditions, to evaluate the 100% modulus and the elongation ratio at break. The results are shown in Table 1.

In addition, the elongation ratio at break is a value that is obtained by subtracting an initial distance between chucks of 20 mm from the distance between chucks during tensile break of the 1.0 mm thick sheet and then dividing the resultant value by the distance between chucks of 20 mm and is expressed as a percentage.
Measuring apparatus: Tensilon universal testing machine (manufactured by Orientec Corporation)
Sample shape: Shape of dumbbell No. 3
Distance between chucks: 20 mm
Tensile speed: 200 mm/min
Measurement atmosphere: temperature: 23°C, humidity: 50%

As the value of 100% modulus is lower, it is shown that the plasticization effect on a vinyl chloride resin is higher. In addition, as the elongation ratio at break is higher, it is shown that the plasticization effect on a vinyl chloride resin is higher.

### (Evaluation of Heat Resistance Performance of Molded Product)

The prepared vinyl chloride resin composition (1) was kneaded with a two-roll mill heated to 170°C for 10 minutes, the kneaded vinyl chloride resin composition (1) was molded with a mold (mold with a thickness of 1.0 mm) for providing a molded product with a thickness of 1.0 mm and a press heated to 170°C to produce a sheet with a thickness of 1.0 mm. From the produced 1.0 mm thick sheet, a dumbbell specimen having a shape of a dumbbell No. 3 was produced in accordance with JIS K6251:2010.

The produced dumbbell specimen was subjected to a heat aging test at 136°C for 168 hours in accordance with JIS K6257:2017. The mass of the dumbbell specimen before and after the heat aging test was measured, and the reduction ratio ((the mass before the heat aging test - the mass after the heat aging test)/the mass before the heat aging test) was calculated. The results are shown in Table 1.

As the reduction ratio is smaller, the polyester plasticizer A remains in the molded product even after the heat aging test, and the effect of the polyester plasticizer A on heat resistance can be expected.

For the dumbbell specimen after the heat aging test, the elongation ratio at break was evaluated in the same manner as in the evaluation of the plasticization effect. The elongation ratio of the dumbbell specimen, or the elongation ratio of the dumbbell specimen after the heat aging test to the elongation ratio of the dumbbell specimen before the heat aging test, was evaluated as the "retention of elongation." The results are shown in Table 1.

As the retention of elongation is higher, the plasticization effect can be kept even after the heat aging test, and a vinyl chloride resin composition having excellent heat resistance can be said.

### (Evaluation of Low-Temperature Softness of Molded Product)

The prepared vinyl chloride resin composition (1) was kneaded with a two-roll mill heated to 170°C for 10 minutes, the kneaded vinyl chloride resin composition (1) was molded with a mold (mold with a thickness of 1.0 mm) for providing a molded product with a thickness of 1.0 mm and a press heated to 170°C to produce a sheet with a thickness of 1.0 mm.

From the obtained sheet, a specimen was produced in accordance with a test method specified in JIS K6773:2007, and the softening temperature (unit: °C) was evaluated with a Clash-berg torsion flexibility tester. The results are shown in Table 1. As the softening temperature is lower, it is shown that the molded product is more excellent in cold resistance.

### (Evaluation of Compatibility of Plasticizer)

The prepared vinyl chloride resin composition (1) was kneaded with a two-roll mill heated to 170°C for 10 minutes, the kneaded vinyl chloride resin composition (1) was molded with a mold (mold with a thickness of 1.0 mm) for providing a molded product with a thickness of 1.0 mm and a press heated to 170°C to produce a sheet with a thickness of 1.0 mm. This sheet was cut into a size of 5 cm by 5 cm to produce two 1.0 mm thick sheets. The two produced sheets were superposed and allowed to remain under conditions of 70°C and a relative humidity of 95% for 30 days. After that, the states of the surface of the sheets and the surface where the sheets were superposed were evaluated according to the following evaluation criteria. The results are shown in Table 1.
A: When the surface of the sheets and the surface where the sheets are superposed are visually observed, a foreign substance in a powder shape, a viscous state, or the like (bleeding) cannot be detected, and bleeding cannot be detected by touching the surface of the sheets and the surface where the sheets are superposed with a finger.
B: When the surface of the sheets and the surface where the sheets are superposed are visually observed, bleeding can be detected, or bleeding can be detected by touching the surface of the sheets and the surface where the sheets are superposed with a finger.

Each vinyl chloride resin composition was prepared and evaluated in the same manner as in Example 1 except that each plasticizer listed in Table 1 was used instead of the plasticizer A. The results are shown in Table 1.

**[Table 1]**

| | | Example 1 | Example 2 | Example 3 | Example 4 | Example 5 | Example 6 | Example 7 | Comparative Example 1 | Comparative Example 2 | Comparative Example 3 |
|---|---|---|---|---|---|---|---|---|---|---|---|
| Plasticizer | | Plasticizer A | Plasticizer B | Plasticizer C | Plasticizer D | Plasticizer E | Plasticizer F | Plasticizer G | Plasticizer A' | Plasticizer B' | Plasticizer C' |
| Proportion of 1,5-pentanediol in glycol [mol%] | | 80 | 50 | 30 | 50 | 50 | 50 | 10 | 94 | 50 | 0 |
| Plasticizer solidification point [°C] | | 6 | -22 | -19 | 10 | -2 | 4 | 14 | 26 | 34 | -35 |
| Plasticization effect | 100% modulus [Mpa] | 11.4 | 10.7 | 10.5 | 11.6 | 10.8 | 10.5 | 11.6 | 11.9 | 11.5 | 12.0 |
| | Elongation ratio [%] | 339 | 352 | 344 | 333 | 350 | 341 | 330 | 311 | 332 | 332 |
| Heat resistance | Heat aging reduction [%] | 3.2 | 2.6 | 2.7 | 2.8 | 1.8 | 1.6 | 2.1 | 2.2 | 2.3 | 4.1 |
| | Retention of elongation [%] | 102 | 100 | 102 | 99 | 98 | 101 | 102 | 101 | 101 | 101 |
| Cold resistance | Low-temperature softening temperature [°C] | -20 | -17 | -19 | -18 | -20 | -25 | -22 | -17 | -16 | -14 |
| Compatibility | | A | A | A | A | A | A | A | B | B | A |

From the results of Table 1, it is found that the plasticizer using 1,5-pentanediol and a branched alkylene glycol having 3 to 18 carbon atoms effectively suppresses bleeding and sufficiently achieve a plasticization effect, heat resistance, and cold resistance. On the other hand, it is found that the plasticizer of Comparative Example 1 in which the amount of 1,5-pentanediol is large and the plasticizer of Comparative Example 2 in which 1,5-pentanediol is used but the branched alkylene glycol having 3 to 18 carbon atoms is not used cause bleeding.

In addition, it is shown that the plasticizer of Comparative Example 3 using no 1,5-pentanediol is inferior to the plasticizers of Examples 1 to 7 and Comparative Examples 1 and 2 using 1,5-pentanediol in heat resistance and cold resistance.

## Claims

1. A plasticizer for a vinyl chloride resin that is a polyester using a glycol having 2 to 18 carbon atoms, an aliphatic dicarboxylic acid having 4 to 14 carbon atoms, and a monoalcohol having 4 to 18 carbon atoms and/or a monocarboxylic acid having 2 to 21 carbon atoms as reaction raw materials,
wherein the glycol includes 1,5-pentanediol and an alkylene glycol having a branched alkylene chain having 3 to 18 carbon atoms; and
wherein the 1,5-pentanediol in the glycol has a total content proportion within a range of 5 to 90 mol%.

2. The plasticizer for a vinyl chloride resin according to claim 1, wherein the plasticizer for a vinyl chloride resin has a solidification point of 15°C or lower.

3. The plasticizer for a vinyl chloride resin according to claim 1 or 2, wherein the alkylene glycol is one or more kinds selected from the group consisting of 1,2-propanediol, 1,2-butanediol, 1,3-butanediol, 2-methyl-1,3-propanediol, neopentyl glycol, and 3-methyl-1,5-pentanediol.

4. The plasticizer for a vinyl chloride resin according to claim 1 or 2, wherein the aliphatic dicarboxylic acid having 4 to 14 carbon atoms is one or more kinds selected from the group consisting of adipic acid and sebacic acid.

5. The plasticizer for a vinyl chloride resin according to claim 1 or 2, wherein the monoalcohol is one or more kinds selected from the group consisting of octanol, 2-ethylhexanol, and isononyl alcohol.

6. The plasticizer for a vinyl chloride resin according to claim 1 or 2, wherein the monocarboxylic acid is one or more kinds selected from the group consisting of 2-ethylhexanoic acid, a hydrogenated coconut oil fatty acid, and lauric acid.

7. The plasticizer for a vinyl chloride resin according to claim 1 or 2, wherein the polyester has a number-average molecular weight within a range of 500 to 4,000.

8. A vinyl chloride resin composition comprising: the plasticizer for a vinyl chloride resin according to claim 1 or 2; and a vinyl chloride resin.

9. The vinyl chloride resin composition according to claim 8, wherein the plasticizer for a vinyl chloride resin has a content within a range of 10 to 150 parts by mass with respect to 100 parts by mass of the vinyl chloride resin.

10. A molded product of the vinyl chloride resin composition according to claim 8.

11. A laminate comprising: a urethane resin layer; and a vinyl chloride resin layer,
wherein the vinyl chloride resin layer includes the plasticizer for a vinyl chloride resin according to claim 1 or 2.
